# FASCICULE DE BREVET EUROPEEN

(11) **EP 0 406 144 B1**
(45) Date de publication et mention de la délivrance du brevet: **26.01.1994**
(21) Numéro de dépôt: 90470039.0
(22) Date de dépôt: 25.06.1990
(51) Int. Cl.: F16L 21/03

(54) **Garniture d'étanchéité à talon annulaire d'ancrage**
Abdichtungselemente mit ringförmigem Ankerabsatz
Seal assembly with an annular anchor bead

(30) Priorité: 28.06.1989 FR 8908858
(43) Date de publication de la demande: 02.01.1991
(73) Titulaire: PONT-A-MOUSSON S.A., 54017 Nancy (FR)
(72) Inventeur: Percebois, Alain, F-54700 Blenod les Pont-à-Mousson (FR); Vitel, Jean-Pierre, F-54700 Blenod les Pont-à-Mousson (FR); Remy, André, F-54700 Blenod les Pont-à-Mousson (FR)
(74) Mandataire: Puit, Thierry

(56) Documents cités:
- FR-A- 1 329 061
- FR-A- 2 013 548
- FR-A- 2 094 972
- FR-A- 2 512 917
- FR-A- 2 557 667

## Description

La présente invention est relative à une garniture d'étanchéité en élastomère, destinée à être montée dans un emboîtement d'un tuyau, cette garniture d'étanchéité comportant une structure d'ancrage et un corps d'étanchéité fonctionnant par compression radiale, la structure d'ancrage présentant un talon d'ancrage, situé à une face radialement externe de la garniture d'étanchéité et formant une saillie radiale par rapport à celle-ci.

Pour poser ladite garniture dans l'emboîtement auquel elle est destinée, il est nécessaire de la plier ce qui, dans certains cas, est très difficile compte tenu de la raideur naturelle de la garniture.

Or, de plus, une garniture de ce type doit pouvoir assurer une étanchéité parfaite en fonction :
- des tolérances dimensionnelles des tuyaux à raccorder,
- de l'excentration d'un tuyau par rapport à l'autre,
- de la pression du fluide circulant dans la canalisation.

De plus, on connaît par le document FR 2 554 205, une garniture d'étanchéité du type de celui décrit dans le préambule de la revendication 1.

Le talon d'ancrage de cette garniture est prolongé, dans le sens radial interne à la surface interne de la garniture, par un pied annulaire de compression. La garniture est fabriquée en un élastomère monodureté.

Si une garniture de ce type permet effectivement d'assurer une bonne étanchéité, il apparaît que, compte tenu de sa raideur qui la rend difficile à plier, sa pose dans l'emboîtement dans lequel elle est destinée à être montée est encore plus délicate que dans le cas précédent, surtout dans le cas des tuyaux de petits diamètres inférieurs à 250 mm.

La présente invention a donc pour but une garniture d'étanchéité présentant un talon d'ancrage d'une géométrie, qui permette une pose aisée de cette garniture dans un emboîtement dans lequel elle est destinée à venir se loger.

La présente invention a donc pour objet une garniture d'étanchéité en élastomère pour joint entre deux tuyaux. Ladite garniture est destinée à être montée dans un emboîtement d'un tuyau, cette garniture d'étanchéité comportant une structure d'ancrage et un corps d'étanchéité fonctionnant par compression radiale, la structure d'ancrage étant constituée d'un talon d'ancrage, situé à une face radialement externe de la garniture d'étanchéité et formant une saillie radiale par rapport à celle-ci, des encoches étant ménagées à une surface radiale externe de la garniture dans le talon d'ancrage, lesdites encoches étant creusées sur toute la longueur axiale dudit talon, et le rapport entre le hauteur H du talon d'ancrage et l'épaisseur E du corps d'étanchéité étant supérieur à 0,2.

Les autres caractéristiques et avantages ressortiront à la suite de la description qui va suivre faite en référence aux dessins donnés uniquement à titre d'exemples non limitatifs et parmi lesquels:
- la Fig.1 représente une vue partielle en coupe axiale d'une garniture d'étanchéité selon l'invention,
- la Fig.2 représente un joint d'étanchéité constitué d'un bout mâle, d'un emboîtement, et d'une garniture d'étanchéité selon l'invention,
- La Fig.3 est une vue schématique de la garniture d'étanchéité selon l'invention,
- La Fig.4 représente une variante de la garniture d'étanchéité selon l'invention.

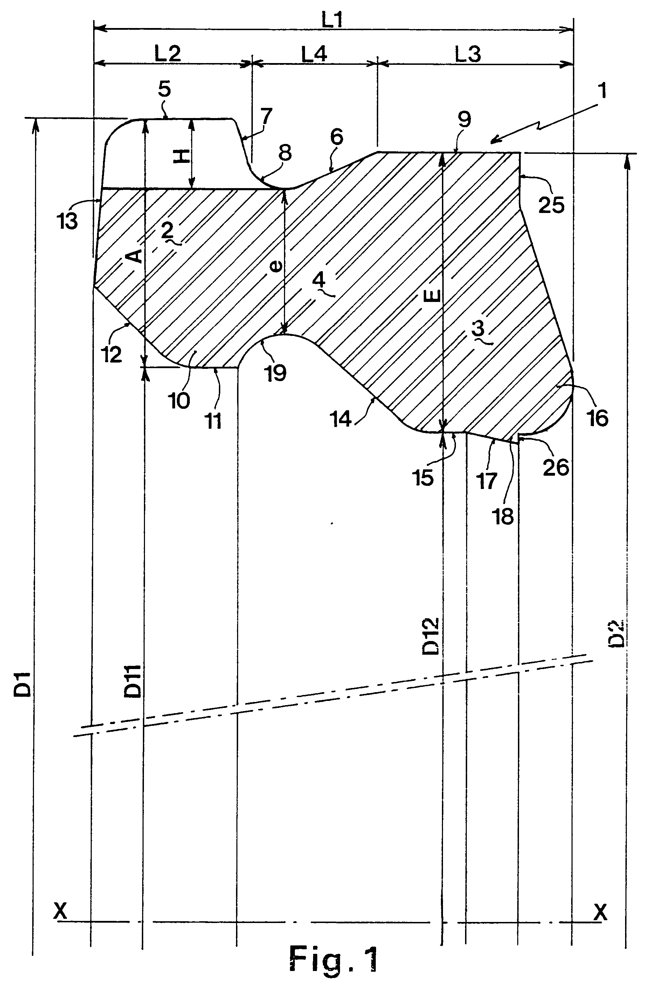

Comme on le voit à la Fig.1, une garniture d'étanchéité 1 d'axe X-X selon l'invention présente une structure d'ancrage 2 de longueur axiale L2 et un corps d'étanchéité 3 de longueur axiale L3 prolongeant la structure d'ancrage 2 selon l'axe X-X, une structure intermédiaire de liaison 4 de longueur axiale L4 reliant la structure d'ancrage 2 au corps d'étanchéité 3.

La longueur axiale L2 de la structure d'ancrage 2 représente de 25 % à 35 % de la longueur axiale totale L1 de la garniture 1.

Plus particulièrement, le volume de la structure d'ancrage 2 représente entre 25 % et 35% du volume total de la garniture d'étanchéité 1.

La garniture d'étanchéité 1 présente une surface radialement externe constituée d'un talon d'ancrage 5 de la structure d'ancrage 2, de surface externe cylindrique et de diamètre D1, relié à une surface tronconique 6 de la structure de liaison 4 par une face 7, plane, ou légèrement tronconique de conicité convergeant vers le corps d'étanchéité 3 et une surface courbe 8.

La surface tronconique 6 se prolonge, selon l'axe X-X, par une surface cylindrique 9 du corps d'étanchéité 3.

Comme on le voit sur la Fig.1, la surface 6 est à conicité ouverte vers le corps d'étanchéité 3, les surfaces 6, 7 et 8 formant une surface concave, les surfaces 7 et 8 formant une joue de hauteur H égale et donc de diamètre interne égal à (D1- 2xH).

Comme on le voit toujours Fig 1, le diamètre D2 de la surface cylindrique 9 du corps d'étanchéité est inférieur ou égal à D1 et supérieur à (D1- 2xH).

La garniture d'étanchéité 1 présente, à sa surface interne, un pied annulaire 10, en prolongement radial interne du talon d'ancrage 5, c'est à dire en vis-à-vis de celui-ci.

Ce pied annulaire 10 est constitué par une surface interne cylindrique 11 de diamètre D11 et par une surface d'entrée 12 tronconique d'axe X-X reliée au talon d'ancrage 5 par une surface légèrement tronconique 13 d'axe X-X.

Le corps d'étanchéité 3 présente, à sa surface interne située à proximité du pied annulaire 10, une surface tronconique 14 de demi-angle au sommet d'environ 40°, à conicité ouverte vers la structure d'ancrage 2, suivie d'une seconde surface interne 15 cylindrique d'axe X-X de diamètre interne D12 terminée par une surface tronconique 17 de demi-angle au sommet de 10° à 20°, à conicité ouverte vers la structure d'ancrage 2.

Le diamètre interne D12 de la surface interne 15 est inférieur au diamètre D11 de la surface 11 du pied annulaire 10.

La face transversale de l'extrémité du corps d'étanchéité 3 opposée à la face 13 de la structure d'ancrage 2 présente un lobe 16, en saillie axiale par rapport à cette face transversale et deux faces 25 et 26 constituant une partie de ladite face transversale de part et d'autre du lobe 16.

La surface 26 forme avec la surface 17 une petite lèvre triangulaire 18, la surface 25, plane ou légèrement tronconique perpendiculaire à l'axe X-X, se raccordant à la face cylindrique externe 9 du corps d'étanchéité 3.

Une gorge annulaire 19, située entre le pied annulaire 10 et le corps d'étanchéité 3 à la surface interne de la garniture 1, relie la surface interne 11 du pied 10 à la surface interne tronconique 14 du corps d'étanchéité 3 et constitue la limite radiale interne de la structure de liaison 4.

Comme on le voit Fig.1, l'arète constituée par la surface 11 du pied 10 et la gorge annulaire 19 est située au droit de la surface 7 limitant latéralement le talon d'ancrage 5.

Ainsi, le rapport entre l'épaisseur e minimale de la garniture 1, au droit de la gorge 19 et de la surface courbe 8, et la hauteur H du talon d'ancrage 5 est compris entre 1,3 et 2,5.

Plus particulièrement, le rapport entre la hauteur H du talon d'ancrage 5 et l'épaisseur E du corps d'étanchéité doit être supérieur à 0,2 pour que l'effet d'ancrage assuré par le talon d'ancrage 5, en combinaison avec le pied annulaire 10, demeure suffisant.

Préférentiellement le rapport H/E est compris entre 0,25 et 0,38.

Par ailleurs, afin de respecter des taux de compression raisonnables de la garniture 1, qui évitent donc un vieillissement prématuré de l'élastomère constituant la garniture 1, tout en assurant une étanchéité effective dans la gamme des tolérances que la garniture doit absorber, il a été montré que si A représente l'épaisseur de la garniture d'étanchéité au droit du talon 5 et du pied 10, il fallait, d'une part, que le rapport A/E soit compris entre 0,80 et 1, préférentiellement entre 0,85 et 0,95, et, d'autre part, que le rapport (D11 - D12)/(2*E) soit supérieur à 0,18 préférentiellement entre 0,2 et 0,3.

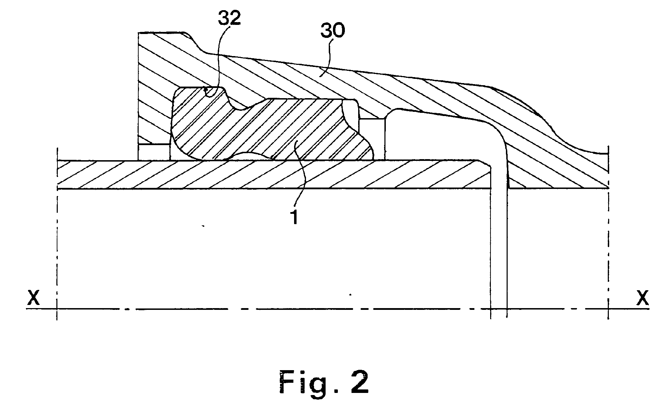

Comme on le voit Fig.2, une garniture d'étanchéité 1 du type décrit ci-avant est destinée à venir être montée à l'intérieur d'un emboîtement 30 d'axe X-X d'un tuyau à raccorder.

Le talon d'ancrage 5 vient se loger dans une gorge 32 dudit emboîtement, les surfaces 6, 7, 8 et 9 de la garniture 1 venant au contact de surfaces correspondantes de l'emboîtement 30.

Pour monter la garniture d'étanchéité selon l'invention dans son emboîtement, la garniture est pliée, par exemple manuellement ou par un outil portable ou non, jusqu'à être déformée suffisamment pour autoriser son introduction dans l'emboîtement.

Généralement, la garniture d'étanchéité subit une déformation en cardioïde, c'est-à-dire en forme de deux lobes séparés par une invagination.

Or, particulièrement si on désire pouvoir poser manuellement une garniture du type décrit ci-dessus dans un emboîtement, celle-ci présente une raideur qui rend cette opération très difficile.

Il a été ainsi trouvé que, sans modifier les performances de la garniture d'étanchéité, il était possible d'obtenir une diminution de la raideur de cette garniture en ménageant, à la surface externe de la garniture, dans le talon d'ancrage 5, des encoches 27, débouchant à cette surface externe, creusées sur toute la longueur axiale dudit talon.

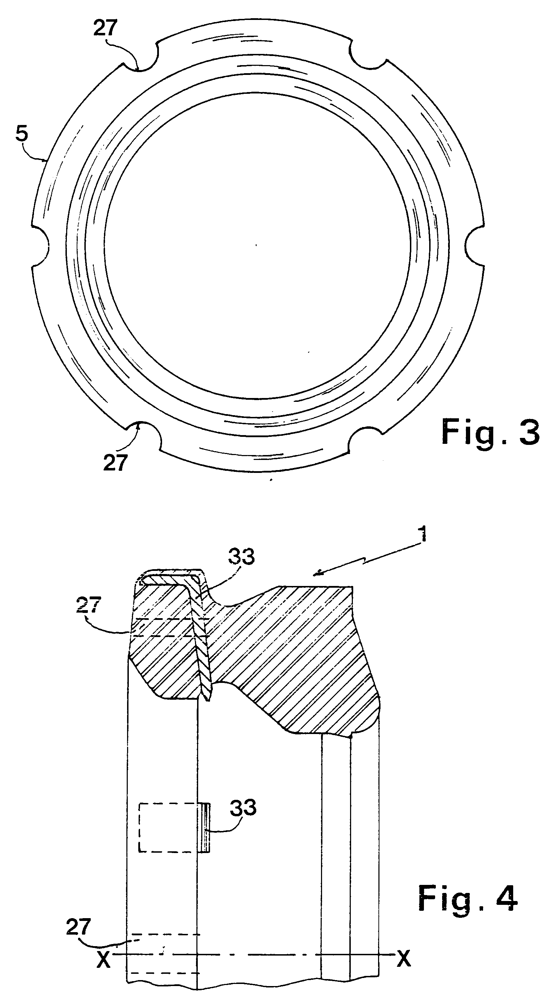

Selon le mode de réalisation préférentielle de l'invention, tel que représenté aux Fig.1 et 3, chaque encoche 27 est d'une profondeur pouvant atteindre la hauteur H du talon 5 et préférentiellement supérieure à 0,66 x H.

Par ailleurs, comme représenté Fig.3, chaque encoche 27 présente, selon un plan de coupe perpendiculaire à l'axe X-X de la garniture, une section en arc de cercle.

Enfin, pour permettre une diminution suffisante de la raideur de la garniture, il convient de ménager au moins trois encoches 27 régulièrement réparties à la périphérie du talon d'ancrage 5, sur l'exemple de réalisation représenté Fig.3, ces encoches 27 sont au nombre de six.

Selon la variante illustrée Fig.4, la garniture d'étanchéité selon l'invention est destinée à recevoir des inserts métalliques 33 de verrouillage d'un bout mâle d'un tuyau à raccorder dans un emboîtement, muni d'une garniture d'étanchéité, d'un autre tuyau à raccorder avec le précédent.

On connaît en effet, par exemple par le document FR 2 621 376 , une garniture d'étanchéité, présentant un talon d'ancrage de ladite garniture dans l'emboîtement, dans laquelle des éléments de verrouillage régulièrement répartis, constitués par des inserts métalliques, traversent radialement de part en part la garniture au niveau de son talon d'ancrage.

Or, il est apparu que lors de la pose d'une garniture de ce type, en plus du problème de raideur évoqué ci-avant, les inserts 33, lors du pliage de la garniture, avaient tendance à se décoller de la garniture dans laquelle ils sont disposés.

Ce phénomène est particulièrement important dans les zones radialement externes de la garniture qui sont mises en tension lors du pliage de celle ci.

Or, l'utilisation des encoches 27 de la garniture selon la présente invention, si elle permet de diminuer la raideur de la dite garniture, permet aussi de concentrer les contraintes au niveau de ces encoches en diminuant donc considérablement ces contraintes, et particulièrement la tension, au niveau des surfaces de contact entre les inserts 33 de verrouillage et l'élastomère constituant la garniture qui les entoure.

Le phénomène de décollement exposé ci-avant est ainsi évité.

La présente invention permet donc de réaliser une garniture d'étanchéité à talon d'ancrage et corps d'étanchéité fonctionnant par compression radiale qui présente une raideur moindre que dans l'art antérieur tout en assurant une étanchéité parfaite.

## Revendications

1. Garniture d'étanchéité (1) en élastomère, destinée à être montée dans un emboîtement (30) d'un tuyau, cette garniture d'étanchéité (1) comportant une structure d'ancrage (2) et un corps d'étanchéité (3) fonctionnant par compression radiale, la structure d'ancrage (2) présentant un talon d'ancrage (5), situé à une face radialement externe de la garniture d'étanchéité (1) et formant une saillie radiale par rapport à celle ci, caractérisée en ce que des encoches (27) sont ménagées à une surface radiale externe de la garniture (1) dans le talon d'ancrage (5), lesdites encoches (27) étant creusées sur toute la longueur axiale dudit talon (5), et en ce que, le rapport entre la hauteur H du talon d'ancrage (5) et l'épaisseur E du corps d'étanchéité (3) étant supérieur à 0,2.

2. Garniture d'étanchéité selon la revendication précédente caractérisée en ce que au moins trois encoches (27) régulièrement réparties sont ménagées à la périphérie du talon d'ancrage (5).

3. Garniture d'étanchéité (1) selon l'une des revendications précédentes caractérisée en ce que cette garniture (1) présente, à sa surface interne, un pied annulaire (10), en prolongement radial interne du talon d'ancrage (5).

4. Garniture d'étanchéité (1) selon l'une quelconque des revendications 1 à 3, caractérisée en ce qu'elle est fabriquée en un élastomère monodureté.

5. Utilisation de la garniture (1) selon l'une quelconque des revendications précédentes pour assurer l'étanchéité d'un joint entre un bout mâle et un emboîtement de tuyaux.

## Patentansprüche

1. Dichtungsausrüstung (1) aus Elastomer zur Montage in einer Schäftung (30) eines Rohrs, mit einer Verankerungsstruktur (2) und einem durch radiale Kornpression wirkenden Dichtungskörper (3), wobei die Verankerungsstruktur (2) einen Verankerungsabsatz (5) aufweist, der an einer radialen Außenfläche der Dichtungsausrüstung (1) angordnet ist und bezüglich dieser einen radialen Vorsprung bildet, dadurch gekennzeichnet, daß
Kerben (27) an einer radialen Außenfläche der Dichtungsausrüstung (1) im Verankerungsabsatz (5) gebildet sind, die über die gesamte axiale Länge des Absatzes (5) ausgehöhlt sind, und daß das Verhältnis zwischen der Höhe H des Verankerungsabsatzes (5) und der Dicke E des Dichtungskörpers (3) größer als 0,2 ist.

2. Dichtungsausrüstung nach dem vorhergehenden Anspruch, dadurch gekennzeichnet, daß wenigstens drei regelmäßig verteilte Kerben (27) am Umfang des Verankerungsabsatzes (5) gebildet sind.

3. Dichtungsausrüstung (1) nach einem der vorhergehenden Ansprüche, dadurch gekennzeichnet, daß die Ausrüstung (1) an ihrer Innenfläche einen ringförmigen Fuß (10) in radialer innerer Verlängerung des Verankerungsabsatzes (5) aufweist.

4. Dichtungsausrüstung (1) nach einem der vorhergehenden Ansprüche, dadurch gekennzeichnet, daß sie aus Einhärten-Elastomer gefertigt ist.

5. Verwendung der Dichtungsausrüstung (1) nach einem der vorhergehenden Ansprüche zur Sicherstellung der Dichtigkeit einer Verbindung zwischen einem Einsteckende und einer Schäftung von Rohren.

## Claims

1. Elastomeric sealing gasket (1) which is intended to be mounted in a socket (30) of a pipe, this sealing gasket (1) having an anchoring structure (2) and a sealing body (3) functioning by radial compression, the anchoring structure (2) having an anchoring heel (5), located on a radially outer face of the sealing gasket (1) and forming a radial projection with respect to the latter, characterized in that notches (27) are made in an outer radial surface of the gasket (1) in the anchoring heel (5), the said notches (27) being cut over the whole axial length of the said heel (5), and in that the ratio between the height H of the anchoring heel (5) and the thickness E of the sealing body (3) being greater than 0.2.

2. Sealing gasket according to the preceding claim, characterized in that at least three regularly distributed notches (27) are made on the periphery of the anchoring heel (5).

3. Sealing gasket (1) according to one of the preceding claims, characterized in that this gasket (1) has, on its inner surface, an annular foot (10) as a radially inner extension of the anchoring heel (5).

4. Sealing gasket (1) according to any one of Claims 1 to 3, characterized in that it is produced from a single-hardness elastomer.

5. Use of the gasket (1) according to any one of the preceding claims to ensure the sealing of a joint between a male end and a socket of pipes.
